(19)

Europäisches
Patentamt

European
Patent Office

Office européen
des brevets

(11) **EP 2 549 291 A1**

(12) **EUROPEAN PATENT APPLICATION**

(43) Date of publication:
**23.01.2013 Bulletin 2013/04**

(51) Int Cl.:
**G01S 13/00** [(2006.01)]    **G01P 3/64** [(2006.01)]
**G01S 11/02** [(2010.01)]

(21) Application number: **11174515.4**

(22) Date of filing: **19.07.2011**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fraunhofer-Gesellschaft zur Förderung der**
**angewandten Forschung e.V.**
**80686 München (DE)**

(72) Inventors:
• **Suberviola, Ion**
  **91054 Erlangen (DE)**

</td><td>

• **Anorga, Amaia**
  **91054 Erlangen (DE)**

(74) Representative: **Burger, Markus et al**
**Schoppe Zimmermann**
**Stöckeler Zinkler & Partner**
**Postfach 246**
**82043 Pullach (DE)**

<u>Remarks:</u>
Amended claims in accordance with Rule 137(2) EPC.

</td></tr>
</table>

(54) **Calculator, system, method and computer program for obtaining one or more motion parameters of a target**

(57)    A calculator (20) for obtaining motion parameters (26) of the target (14), wherein the calculator (20) is configured to obtain the one or more motion parameters (26) on the basis of at least two time differences. The first time difference describes a timing of passings of a first pair of transmitter-receiver-lines by the target (14), and the second time difference describes a timing of passings of a second pair of transmitter-receiver-lines by the target (14), wherein the second pair of the transmitter-receiver-lines is different from the first pair of transmitter-receiver-lines.

FIG 1

## Description

Technical Field

Embodiments according to the present invention relate in general to radar systems or more specifically to forward-scattering radar systems. Some embodiment relate to target positioning by using forward-scattering radar and, especially, to a method for target trajectory and velocity determination in forward scattering radar. Some embodiment relate to a calculator, a system, a method and a computer program for obtaining one or more motion parameters of a target.

Background of the Invention

A radar system can be used for determining a distance, velocity and direction of a target or especially of a moving target such as a plane or a ship. The radar system uses electromagnetic waves for the detection; therefore, the radar system has a transmitter, which emits electromagnetic waves, and a receiver which, in turn, receives these electromagnetic waves. The target, which should be detected, reflects, scatters or interrupts the electromagnetic waves. The variation of the electromagnetic waves received by the receiver can be used for detecting the target.

There are different types of radar systems, such as, for example, monostatic radar, back-scattering bistatic radar or forward-scattering bistatic radar (FSR). The forward-scattering (bistatic) radar provides higher detection capability than usual back-scattering (bistatic) radar, because of the enhancement of the target's radar cross-section.

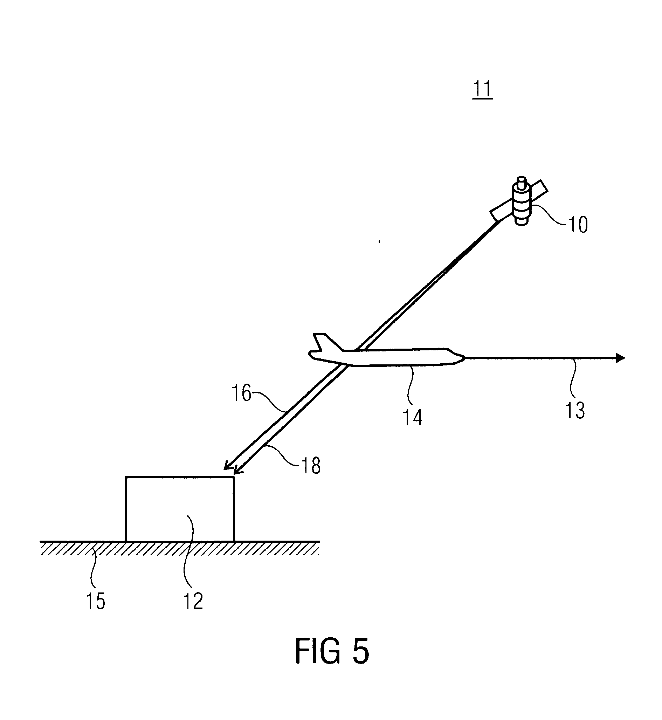

Fig. 5 shows a schematic transmitter-receiver-set-configuration 11 of a forward-scattering radar having a transmitter 10, in this example embodiment illustrated as a satellite, and a receiver 12 arranged on a ground 15. Between the transmitter 10 and the receiver 12, a trajectory 13 of a target 14 which is, in the present example, a plane or aircraft 14 intersects a transmitter-receiver-line 16. The transmitter-receiver-line 16 represents electromagnetic waves emitted from the transmitter 10 to the receiver 12 on the line-of-sight 16, while a forward-scattered-path 18 represents the electromagnetic waves forward scattered by the plane 14. Below, the function of such a forward scattered-radar will be discussed.

The transmitter 10 emits electromagnetic waves, which are scattered or interrupted by the target 14 passing the transmitter-receiver-line 16. The receiver 12 is configured to detect the electromagnetic waves directly via the line-of-sight-path 16 and also scattered by the target 14 via the forward scattering path 18. When the target 14 passes the transmitter-receiver-line 16, also referred to as baseline, the only information that can be extracted or, at least, the only information that can be extracted with comparatively small effort is the exact time of the passing of the transmitter-receiver-line 16. The problem is that an intersection-point of the trajectory 13 and the transmitter-receiver-line 16, which would determine the target's 14 position, cannot be obtained using the transmitter-receiver-set-configuration 11 with the transmitter 10 and the receiver 12 due to the small time delay between the electromagnetic waves detected via the line-of-sight-path 16 and via the forward-scattered-path 18.

However, even if the detection capability of forward-scattering radar is enhanced compared to back-scattered radar, the determination of the position of the target 14 is a difficult task due to the lack of information, the small time delay between the line-of-sight-path 16 (LOS) and forward-scattered-path 18 and a limited availability of Doppler determination.

It is therefore an objective of the invention to provide a concept for obtaining motion parameters of a target, which provides an improved system performance.

Summary of the Invention

An embodiment according to the invention creates a calculator for obtaining one or more motion parameters of a target. The calculator is configured to obtain the one or more motion parameters on the basis of at least two time differences, wherein a first of the time differences describes a timing of passings of a first pair of transmitter-receiver-lines by the target, and wherein a second of the time differences describes a timing of passings of a second pair of transmitter-receiver-lines by the target, wherein the second pair of transmitter-receiver-lines is different from the first pair of transmitter-receiver-lines.

The core of the invention is that one or more motion parameters, such as a distance parameter h, e.g. an altitude information, a velocity parameter v and a direction parameter of a target can be obtained with reasonable effort on the basis of a plurality of time information items. The time information items represent points in time, when a target passes known transmitter-receiver-lines, which are defined by at least two receivers and at least two transmitters. On the basis of the plurality of the time information items, at least two time differences can be obtained or calculated, wherein each of the time differences describes an order of passings of a pair of transmitter-receiver-lines by the target or even a precise timing of said passings. It has been found that the calculator can easily obtain the one or more unknown motion parameters on the basis of the time differences between the passings of at least two different pairs of transmitter-receiver-lines, e.g. on the basis of the use of a timing or an order of passings of a pair of crossing transmitter-receiver-lines by the target.

A preferred embodiment according to the invention provides a calculator wherein the calculator is configured to obtain a first range of possible values of one or more motion parameters, for example, of the distance parameter h or an altitude information (which describes a distance between a trajectory of the target and one of the transmitters or receivers) on basis of one of the time differences, which describes a timing or an order of passings of a second transmitter-receiver-line and of a third transmitter-receiver-line crossing each other at a crossing-point. Here, the calculator can determine whether the possible values of the distance parameter h are larger or smaller than a known distance parameter h1 of the crossing-point (which also describes a distance between the crossing-point and one of the transmitters or the receivers) or whether the distance parameter h at least approximately is equal to the known distance parameter h1 of the crossing-point. Here, it is advantageous that the range of values of the distance parameter h may be estimated or even obtained with good precision under some circumstances by using one time difference. In this embodiment, the distance parameter h may be estimated the more exactly the closer the distance between the trajectory of the target and the crossing-point. Background thereon is that the distance parameter h1 of the crossing-point of two transmitter-receiver-lines is known, and that an assumption about the velocity, which is usually in a range, for example, between 500km/h and 1 Mach can be made so that the distance parameter h of the target or a reasonably small range in which the distance parameter h lies may be estimated by the one time difference. For example, in an extreme case, the distance parameter h of the target would be the same as the distance parameter h1 of the crossing-point if the target passes the two crossing transmitter-receiver-lines at the same time. Here, it is advantageous that the distance parameter h may be exactly determined by using the one time difference, although this is very unlikely to happen. Nevertheless, if the time difference is sufficiently small, it can be derived, on the assumption of a limited velocity v of the target 14, that the distance parameter h lies within a limited interval.

Another preferred embodiment according to the invention provides a calculator, which is configured to obtain a second range of possible values of the distance parameter h on the basis of a further time difference, which describes a timing or an order of passings of further crossing transmitter-receiver-lines, and which is configured to estimate the distance parameter h on the basis of the two or more convergent ranges of possible values of the distance parameter h by an approximation of the overlapping values. The estimation of the distance parameter h is the more exactly the more crossing-points thereon and, thus, the more ranges of possible values of the distance parameter h are available. Here, it is advantageous that the motion parameters and especially the distance parameter h can be determined by an intersection (in the sense of the function of a function of a cut-set of ranges or in the sense of a logical-AND combination of conditions for the motion parameters 26) of different obtained ranges of possible values of the distance parameter h, wherein just the order of the passings of the transmitter-receiver-line may be determined and not the exact point of time. In this embodiment the velocity parameter v of the motion parameters can be determined on basis of an equation describing a relationship between motion parameters and a second time difference, which describes a timing of passings of a second pair of transmitter-receiver-lines, and the determined distance parameter h. Typically there is (at least if some reasonable assumptions regarding the motion of the target are made) a equation or a system of equations which describes a relationship between the one or more unknown motion parameters and the time differences.

In some embodiments, the calculator 20 is configured to obtain the motion parameters on the basis of one or two equations or even more equations. In this case, a first equation describes a relationship between the velocity parameter v, the distance parameter h of the target, which describes a distance between a trajectory of the target and the receiver, and the first time difference, while a second equation describes a relationship between the velocity parameter v, the distance parameter h of the target and the second time difference. It has been found that the two unknown motion parameters regarding distance h and velocity v can be obtained by solving the system of equations, if it is assumed that said two motion parameters are constant or at least approximately constant during the time intervals defining the first time difference and the second time difference and also between the time intervals, which, in turn, has been found to be true in many technical application. Therefore, the calculator is configured to determine a solution or approximate solution of an equation or of a system of the two or more linearly independent equations using geometric information about the transmitter-receiver-lines, such as, for example, the position of the transmitters or receivers and/or the angles between the transmitters-receivers-lines. So, it is advantageous that forward-scattering radar can be used for determining motion parameters 26 of the target 14, even if no information other than the time of the transmitter-receiver-line passings is provided for determining one or more motion parameter.

A further embodiment provides a system for obtaining the motion parameters of the target, wherein the system comprises at least two receivers configured to detect the target passing the transmitter-receiver-lines. The system further comprises the calculator as described above. The system is configured to obtain the first and second time difference on the basis of a detection of the target passing the transmitter-receiver-lines. The receivers of the system may be configured to receive signals from satellites used as transmitters. This is advantageous, because the system enables detecting planes between the ground and the altitude at which the satellites are arranged. Another advantage is the possibility to use present satellites, such as, for example, GPS-satellites (GPS-FSR), Galileo-satellites or other satellites, as transmitters.

For an improved detection capability, the two receivers may be arranged such that same are geographically separated by a distance, e.g. at least 10 m or at least 50 m, which is sufficiently large so that a time difference between a signal of a given one of the transmitters received by the first receiver and the signal of the given one of the transmitters received by the second receiver may be obtained. Thus, the time difference between the signals of the given one of the transmitters received by the first receiver and the second receiver may, for example, be larger than 10 times of a time measurement resolution of the receivers. Further, in order to detect time differences of two pairs of transmitter-receiver-lines, the receivers are arranged such that the two receivers and the two transmitters are, at least approximately, in a common spatial plane.

Another embodiment according to the invention provides a calculator, which is configured to detect the target, the trajectory of which lies within a first spatial plane or within the second spatial plane. A first set of a first plurality of transmitters and receivers "generates" or lies within or at least approximately within a first spatial plane and a second set of a second plurality of transmitters and receivers generates a second spatial plane. Hence, it is advantageous to use a plurality of transmitter and receiver sets in order to enlarge the detection probability.

Another embodiment according to the invention provides a method for obtaining one more motion parameters of the target. The method comprises obtaining a first time difference, which describes a timing of passings of a first pair of transmitter-receiver-lines by the target and obtaining a second time difference, which describes a timing of passings of a second pair of transmitter-receiver-lines, wherein the second pair of transmitter-receiver-lines is different from the first pair of the transmitter-receiver-lines. The method further comprises obtaining one or more motion parameters on the basis of the obtained first and/or second time differences.

## Brief Description of the Drawings

Embodiments according to the present invention will subsequently be discussed taking reference to the enclosed figures in which:

Fig. 1 shows a block diagram of a calculator according to an embodiment;

Fig. 2a shows a schematic representation of a transmitter-receiver-set-configuration having two transmitter-receiver-lines for illustrating the concept of a detection of a target;

Fig. 2b shows a schematic transmitter-receiver-set-configuration having four transmitter-receiver-lines for illustrating the concept of a detection of a target according to an embodiment;

Fig. 2c shows a geometric model for calculating motion parameters according to an embodiment;

Fig. 3 shows a schematic representation of transmitter-receiver-set-configuration having 16 transmitter-receiver-lines for illustrating the concept of a detection of a target according to another embodiment;

Figs. 4a - c show schematic representations of receiver-set-configurations according to embodiments; and

Fig. 5 shows a schematic representation of transmitter-receiver-set-configuration of a forward-scattering radar.

## Detailed Description of the Embodiments

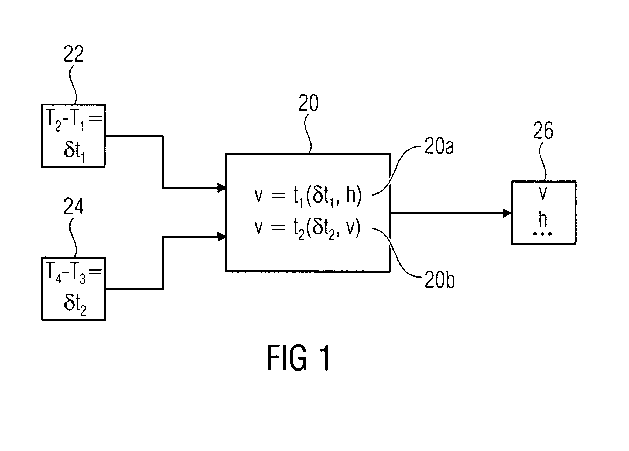

Different embodiments of the teachings disclosed herein will subsequently be discussed referring to Fig. 1-5, wherein within these drawings identical reference numerals are provided to objects having an identical function or a similar function so that objects referred to by identical reference numerals within the different embodiments are interchangeable and the description thereof is mutually applicable.

## Calculator of Fig. 1

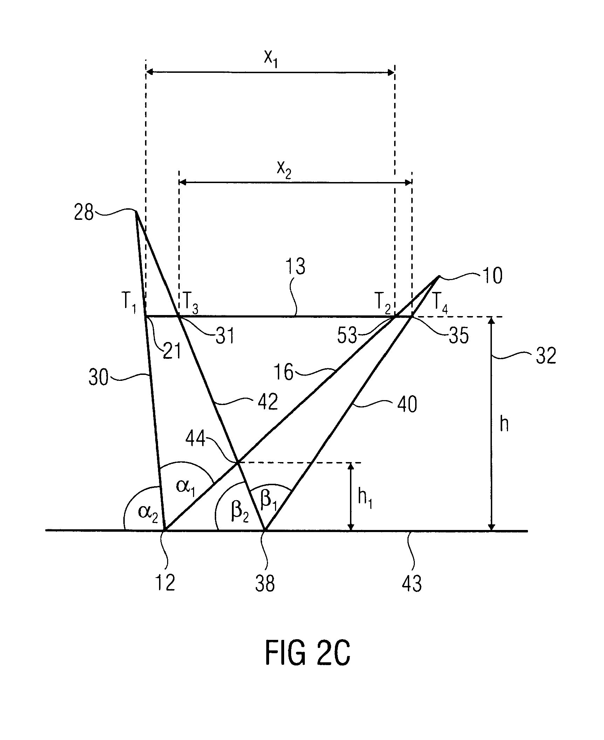

Fig. 1 shows a block schematic diagram of a calculator 20, which has an input for input information 22 regarding a first time difference $\delta t_1$ and for input information 24 regarding a second time difference $\delta t_2$. The calculator 20 has an output for providing motion parameters 26. Furthermore, the calculator 20 is configured to obtain the one or more motion parameters (26) on the basis of at least two time differences. For example, the calculator comprises or, more precisely, is configured to evaluate, one or more, in some embodiments even two or more equations 20a and 20b which represent the basis for the calculation, as described in Fig. 2c. Below, the function of the calculator 20 will be discussed.

The calculator 20 for obtaining one or more motion parameters 26 of the target 14, for example, a distance parameter h and a velocity v, is configured to obtain the one or more motion parameters 26 on the basis of the at least two time differences $\delta t_1$ and $\delta t_2$ described by the input information 22 and 24. The first of the time difference $\delta t_1$ describes a timing of passings of a first pair of transmitter-receiver-lines by the target 14, or more precisely, an order of the passing of a first transmitter-receiver-line at a point of time $T_1$ and of the passing of the second transmitter-receiver-line at a point of time $T_2$ and/or a time value describing a time between passing of said first and second transmitter-receiver-lines. Hence, the time difference $\delta t_1$ is equal, for example, to $T_2$-$T_1$ or describes an order of the passings. The second of the time differences $\delta t_2$ describes a timing of passings of a second pair of transmitter-receiver-lines by the target 14, or more precisely, the order of the passing of the third and fourth transmitter-receiver-line at points of time $T_3$ and $T_4$, respectively, and/or a time value describing a time between passing of said third and fourth transmitter-receiver-lines. Hence, the time difference $\delta t_2$ is, for example, equal to $T_4$-$T_3$. Regarding the transmitter-receiver-lines, it should be noted that the second pair of the transmitter-receiver-lines is different from the first pair of the transmitter-receiver-lines. Background hereon is that the obtaining of the motion parameters 26 is based on a calculation (or determination) and evaluation of at least two different time differences $\delta t_1$ and $\delta t_2$ and thus based on the passings of two different pairs of transmitter-receiver-lines. It should be noted that the two different pairs of transmitter-receiver-lines may be defined by at least three transmitter-receiver-lines. Therefore, one of the points of time $T_4$ and $T_3$, respectively, may be equal to one of the points of time $T_2$ and $T_1$, respectively. However, the points in time $T_1$, $T_2$, $T_3$ and $T_4$ may be mutually different points of time as well. The time differences $\delta t_1$ and $\delta t_2$ may be built by different points of time, e.g. $T_3$ -$T_2$.

The calculator 20 may, for example, be configured to estimate a first range of possible values of the distance parameter h on basis of one time difference $\delta t_3$, equal to $T_3$-$T_2$. For example, the calculator 20 may be configured to obtain an information whether the possible values of the distance parameter h are larger or smaller than a distance parameter $h_1$ of a "virtual" crossing-point generated or defines by a pair of two crossing transmitter-receiver-lines, as will be described below. Moreover, an estimate of the distance parameter h may be obtained, for example, if the time difference is reasonably small, as described below. On the basis of the approximately estimated distance parameter h of the target the velocity parameter v may be obtained by using one equation, for example, the equation 20a.

Alternatively, the calculator 20 may, for example, be configured to obtain the motion parameters 26 by determining a solution of an equation or of a system of equations comprising the first equation 20a and/or the second equation 20b. The equations or the system of equations or a solution algorithm for solving the system of equations may be based on the assumption that the distance parameter h and the velocity parameter v are constant or at least approximately constant during the first and second time intervals $T_2$ - $T_1$ and $T_4$ - $T_3$, and also between the time intervals, e.g. between times $T_2$ and $T_3$ if said time intervals are non-overlapping. The respective equation may, for example, describe a relationship between the motion parameters 26, for example, the velocity parameter v and the distance parameter h of the target 14, and the respective time difference (e.g., the first time difference $\delta t_1$ or the second time difference

$\delta t_2$). This relationship and the solution of the system of the equations 20a and 20b will be described with reference to Fig. 2c.

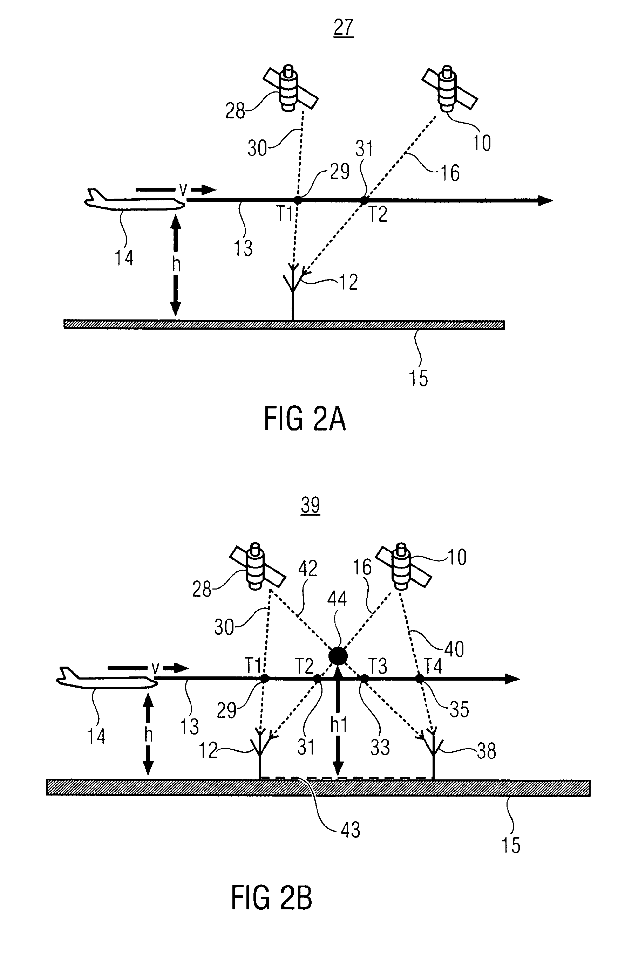

### Illustration of a concept of detecting a target of Fig. 2

In the following, same further explanations will be given taking reference to Figs. 2a - 2c. Figs. 2a - 2c illustrate a concept of detection of the target 14 or of the trajectory 13 of the target 14 by using a forward-scattering radar system comprising transmitters and receivers.

Fig. 2a shows a transmitter-receiver-set-configuration 27 comprising the first transmitter 10 and a second transmitter 28, which are, in this embodiment, satellites, as well as the receiver 12 arranged on the ground. The transmitters 10 and 28 in combination with the receiver 12 define a first pair of transmitter-receiver-lines: a first transmitter-receiver-line 30 between the second transmitter 28 and the receiver 12 and the second transmitter-receiver-line 16 between the transmitter 10 and the receiver 12. Further, Fig. 2a shows the target or the plane 14 moving or flying at the velocity v, at the distance h and in a direction along the trajectory 13. The trajectory 13 is, in this embodiment, parallel or at least approximately parallel, to the ground 15 and intersects the transmitter-receiver-lines 30 and 16, in this embodiment, at two points 29 and 31. The intersect 29 of the first transmitter-receiver-line 30 occurs at the point of time $T_1$ and the intersect 31 of the second transmitter-receiver-line 16 occurs at the point of time $T_2$. The distance between the trajectory 13 of target 14 and the receiver 12 or the transmitters 10 and 28, respectively, is described by as the distance parameter h. In case of a radar system for detecting moving planes, when the target 14 is parallel to the ground 15, the distance parameter h complies with an altitude information of the plane 14, which constitutes the target 14. Below, the function of the embodiment will be discussed.

The target 14 passes the transmitter-receiver-line 30 at a point of time $T_1$ and passes the transmitter-receiver-line 16 at a point of time $T_2$. During the passings of the transmitter-receiver-lines 30 and 16, respectively, the electromagnetic waves emitted from the transmitters 28 and 10, respectively, are interrupted or scattered by the target 14 so that the receiver 12 is able to detect the two points in time $T_1$ and $T_2$. The receiver 12 may calculate (or otherwise determine) the time difference $\delta t_1$ between $T_2$ and $T_1$, which describes the time the target 14 took to go (or move) from the first transmitter-receiver-line 30 to the second transmitter-receiver-line 16 or at least the order of the passings. Alternatively, the calculation of the time difference $\delta t_1$ may be performed by the calculator 20 (not shown), which uses the time difference $\delta t_1$ or the two points of time $T_2$ and $T_1$ as the first input information 22.

It has been found that even assuming a constant velocity parameter v and a constant distance parameter h, the motion parameters 26 typically still cannot be determined on the basis of the one time difference $\delta t_1$ by the calculator 20. The background hereon is that, for example, the time difference $\delta t_1$ is equal for a first case, when the target 14 passes the two transmitter-receiver-lines 30 and 16 at low velocity v at a low altitude (small distance parameter h), and for a second case, when the target 14 passes the transmitter-receiver-lines 30 and 16 at a high velocity v at a high altitude (large distance parameter h). As a result of this, using one pair of transmitter-receiver-lines 30 and 16, the calculator 20 is able to obtain one motion parameter 26, e.g. the velocity v, as a function of the other motion parameter 26, e.g. the distance parameter h, which is, however, not sufficient in many applications.

Such a transmitter-receiver-set-configuration having one pair of transmitter-receiver-lines may be defined by two transmitters and one receiver or, alternatively, by one transmitter and two receivers.

Fig. 2b shows a schematic representation of a transmitter-receiver-set-configuration 39 of transmitters and receivers, which is similar to the transmitter-receiver-set-configuration 37 shown in Fig. 2a, but further comprises a second receiver 38 geographically separated from the receiver 12 by a distance which is typically more than 10 m or 50 m. The distance between the receivers 12 and 38 is set sufficiently large so that a time difference between a signal of a given one of the transmitters 28 and 10 received by the first receiver 12 and the signal of the given one of the transmitters 28 and 10 received by the second receiver 38 may be obtained. Thus, the time difference between the signals of the given one of the transmitters 28 and 10 received by the first receiver 12 and the second receiver 38 may, for example, be larger than 10 times of a time measurement resolution of the receivers 12 and 38. The two receivers 12 and 38 may, for example, be arranged on the ground 15. Due to the presence of the second receiver 38, a second pair of transmitter-receiver-lines is defined: The second pair of transmitter-receiver-lines has a fourth transmitter-receiver-line 40 between the transmitter 10 and the receiver 38 and a third transmitter-receiver-line 42 between the transmitter 28 and the receiver 38. The third transmitter-receiver-line 42 crosses the second transmitter-receiver-line 16 at the crossing-point 44 having a distance h1 to an axis 43 between the two receivers 12 and 38 or to one of the receivers 12 and 38. A distance parameter h1 and a position of the crossing-point 44 is defined by the transmitters 10 and 28 and the receivers 12 and 38. The trajectory 13 of the target 14 intersects the four transmitter-receiver-lines 30, 42, 16 and 40 at points marked by 29, 31, 33 and 35, wherein the points 29, 31, 33 and 35 are passed by the target 14 at the times $T_1$, $T_2$, $T_3$ and $T_4$.

In this transmitter-receiver-set-configuration 39 the system for obtaining the motion parameters 26 of the target 14 comprises the two receivers 12 and 38 as well as the calculator 20 (not shown). The two receivers 12 and 38 as well as the transmitters 10 and 28 are arranged in a common spatial plane within a tolerance in which the trajectory 13 of the target 14 lies such that an angle between the second transmitter 28, a target position on the trajectory 13 of the target 14, which lies in a spatial plane defined by the first transmitter 10, the second transmitter 28 and the first receiver 12, and one of the receivers 12 and 38 is approximately 180° or in a range between 170° and 190° or in a range between 178° and 182°. The restriction of having the receivers 12 and 38 and transmitters 10 and 28 in a same spatial plane is not as restrictive as it seems, because the detection of the target 14 also happens, when the target 14 passes a transmitter-receiver-line 30, 42, 16 and 40 in a certain distance (close to the transmitter-receiver-line). In other words, an extension of a detection region where the receiver 12 or 38 detects when the target 14 enters the detection region surrounding transmitter-receiver-lines 30, 16, 42 and 40, depends on the target's 14 size, the distance h of the trajectory 13 of the target 14 and the wavelength or frequency, respectively, of the transmitters 28 and 10. For example, the detection region may have a diameter of approximately 2 km on an assumption that the target 14 is an airplane flying at an altitude h of 12 km and the transmitter 10 is a satellite at an altitude of 26000 km.

After the structure of the transmitter-receiver-set-configuration 39 has been described, the function of same and especially the determination of the motion parameters 26 on the basis of two time differences $\delta t_1$ and $\delta t_2$ will be discussed below.

The trajectory 13 of target 14 defined by the distance parameter h, the velocity v and the direction is arranged so that the target 14 passes the first pair of the transmitter-receiver-lines 30 and 16 at a point in time T1 and at a point in time $T_2$ and so that the target 14 passes the second pair of the transmitter-receiver-line 42 and 40 at a point in time $T_3$ and at a point in time $T_4$. Due to this transmitter-receiver-set-configuration 39 having two pairs of transmitter-receiver-lines and due to the fact that there are the four points of time $T_1$, $T_2$, $T_3$ and $T_4$ (the timing of the passings of the transmitter-receiver-lines 42, 40, 30 and 16) the calculator 20 is able to obtain the motion parameter 26 on the basis of two time differences $\delta t_1$, equivalent to $T_2$-$T_1$, and $\delta t_2$, equivalent to $T_4$-$T_3$, as described in Fig. 1. It should be noted that the timing of passings transmitter-receiver-lines is understood, on the one hand, as an order of the passings and, on the other hand, as a time between two passings of the transmitter-receiver-lines.

The system or, for example, the calculator 20 obtains the first time difference $\delta t_1$ between the passings of the first pair of transmitter-receiver-lines, for example, the first and second transmitter-receiver-lines 30 and 16 (via the information input 20), and the second time difference $\delta t_2$ between the passings of the second pair of transmitter-receiver-lines, for example, the lines 42 and 40 (via the information input 22). The two different pairs of transmitter-receiver-lines may also be defined by three transmitter-receiver-lines, wherein, in this sense then, for example, the first pair may be defined by the first and second transmitter-receiver-lines 30 and 16 and the second pair by the first and third transmitter-receiver-lines 30 and 42. Alternatively, the pair may be defined by another combination of transmitter-receiver-lines, e.g., the second and third transmitter-receiver-lines 16 and 42, or using further transmitter-receiver-lines defined by further receivers and/or further transmitters.

In order to obtain a sufficiently large time difference between the interruptions or passings of the transmitter-receiver-lines detected by the receivers 12 and 38, the receivers 12 and 38 are separated by a distance, which is larger than 10 times the wavelength of the electromagnetic waves detected by the receivers 12 and 38 or, preferably, even much larger. The calculator 20 uses geometric information about the transmitter-receiver-lines 30, 42, 16 and 40, such as, for example, the included angles $\alpha_1$, $\beta_1$ between the lines (see, for example, Fig. 2c), the position of the receivers 12 and 38, the position of the transmitters 10 and 28 and/or the distance parameter h1 of the crossing-point 44, also referred to as spatial virtual cross-point. The relationship of the two time differences $\delta t_1$ and $\delta t_2$ and the geometry of the transmitter-receiver-lines 30, 16, 42 and 40 will be discussed with reference to Fig. 2c, in detail.

Below, an embodiment of an estimation of the distance parameter h on basis of one time difference $\delta t_3$ between $T_3$ and $T_2$ will be discussed.

The above-described transmitter-receiver-set-configuration 39 which comprises a pair of transmitter-receiver-lines 42 and 16 crossing each other enables the estimation of the distance parameter h or of a range of values of the distance parameter h, respectively. In the following three different cases of value-ranges of the distance parameter h will be explained:

It could be concluded that the distance parameter h of the target 14 is the same as the distance parameter h1 of the crossing-point 44, if the target 14 passed the transmitter-receiver-lines 42 and 16 at the same time, namely if $T_2=T_3$. With the known or determined distance parameter h the velocity parameter v may be determined by using the points of time T1 and/or T2 and one equation, e.g., the equation 20a, using the assumption that the distance parameter h and the velocity parameter v are constant, as described in Fig. 2c. However, passing the two crossing transmitter-receiver-lines 42 and 16 at the same time is an improbable case. Normally, the point of time $T_2$ will be different from the point of time $T_3$. Nevertheless, in that case the calculator 20 is able to determine whether the trajectory 13 of the target 14 (having a known direction or having a direction defined on the basis of more than two transmitter-receiver-lines-passings) is above or below the crossing-point 44 on basis of the time difference $\delta t_3$, which describes the order of passings of the second transmitter-receiver-line 16 and of the third transmitter-receiver-line 42. If the point in time T2 is later than the point in time T3 if it is found that the time difference T3 - T2 > 0, the trajectory 13 of the target 14 is closer to the transmitters 10 and 28 which is, for example, true if the trajectory 13 of the target 14 is above the crossing-point 44, or in other words, the first range of possible values of the distance parameter h comprises values larger than the distance parameter h1 of the crossing-point 44. If the point in time T2 is earlier than the point in time T3 or if it is found that the time difference T3 - T2 < 0, the trajectory 13 of the target 14 is closer to the receivers 12 and 38 which is, for example, true if the trajectory 13 of the target 14 is below the crossing-point 44, or in other words, the first range of possible values of the distance parameter h comprises values smaller than the distance parameter h1 of the crossing-point 44.

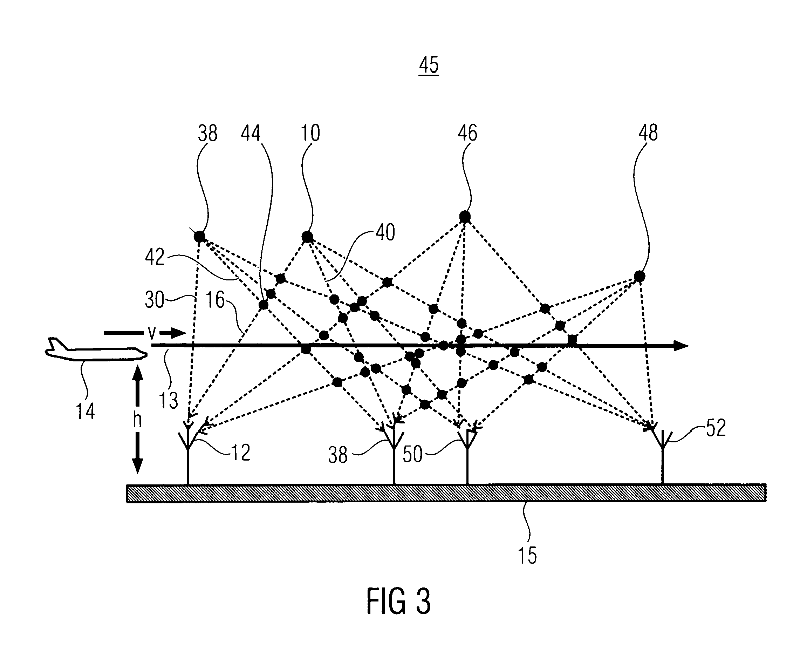

By using a transmitter-receiver-set-configuration having more than one crossing-point 44 the distance parameter h of the target 14 may be estimated more exactly by overlapping ranges of possible values of the distance parameters h derived from different crossing-points, as will be discussed in Fig. 3.

Further, when the distance parameter h corresponds roughly to the distance parameter h1 of the crossing-point 44 the distance parameter h may be estimated on the basis of a single time difference $\delta t_3$, for example, $T_2 - T_3$. Background thereon is that the time difference $\delta t_3$ between the first and the second passing is very small, if the distance parameter h of the target 14 is close to the distance parameter h1 of the crossing-point 44. As a consequence of this the obtained distance parameter h is nearly independent from the velocity parameter v under the assumption that a velocity of real-life planes is typically in a range between 500 km/h and Mach 1 or between 300 km/h and Mach 3. Consequently, it can be concluded that the distance parameter h is approximately equal to the distance parameter h1 or within a sufficient narrow interval if it is found that $\delta t_3$ is below a predefined threshold value.

Fig. 2c shows a geometrical model of the transmitter-receiver-set-configuration 39 shown in Fig. 2b. The first pair of transmitter-receiver-lines 30 and 16 has an included angle $\alpha_1$ and an off-axis angle $\alpha_2$ to the axis 43. The first pair of transmitter-receiver-lines 30 and 16 is intersected by the trajectory 13 at intersections 29 and 31, wherein the points 29 and 31 are passed by the target 14 at the times $T_1$ and $T_2$, respectively. The spatial distance between the intersections 29 and 31 is referred to as $x_1$. The second pair of transmitter-receiver-lines 42 and 40 has an included angle $\beta_2$ and the off-axis angle $\beta_2$. The trajectory 13 intersects the second pair of transmitter-receiver-lines 42 and 40 at intersections 33 and 35 (passed by the target 14 at the points of time $T_3$ and $T_4$). The spatial distance between the two intersections 33 and 35 is referred to as $x_2$.

The equations 20a and 20b, which may be used by the calculator 20 for obtaining one or more motion parameters 26 of the target 14, are dependent on geometric parameters of the two pairs of transmitter-receiver-lines 30, 16, 42 and 40: The distance $x_1$ is, on the one hand, a function of the angles $\alpha_1$ and $\alpha_2$ as well as of the distance parameter h, and, on the other hand, a function of the velocity v of the target 14 and the time difference $\delta t_1$ (= $T_2$-$T_1$), wherein it is assumed that the direction of the trajectory 13 of the target 14 is known or at least approximately known and the distance parameter h and the velocity v is constant, which has been found to be true in most real-life scenarios. This two relationships result, for example, in a first equation 20a having the two unknowns velocity v and distance parameter h (with $\delta t_1$ and the geometry parameter being known). Analogously, a geometry of the second pair of transmitter-receiver-lines 42 and 40 can be described by a second equation 20b, which describes the relationship between the distance parameter h, the velocity parameter v and the second time difference $\delta t_2$ (wherein $\delta t_2$ and the geometry parameter are known). To obtain the unknown motion parameters 26 velocity v and distance parameter h, the calculator may be configured to determine and/or solve the system of equations comprising (or consisting) the first equation 20a and the second equation 20b. In order to obtain a unique solution for the motion parameters 26 velocity v and distance parameter h, two pairs of the transmitter-receiver-lines are chosen by the calculator 20 or the system or are pre-determined such that the first equation 20a describing a relationship of the first pair of transmitter-receiver-lines 16 and 30 with the first time difference $\delta t_1$, as a known input value, and the second equation 20b describing a relationship of the second pair of transmitter-receiver-lines 40 and 42 with the second time difference $\delta t_2$, as a known input value, are linearly independent; as a result of this, the equations of the distance parameter $x_1$ and of the distance parameter $x_2$ are linearly independent.

If the distance parameter h is known, e.g. due to the estimation of distance parameter h, as described above, the solution of one equation is sufficient for determining the velocity parameter v.

Illustration of a concept of detecting a target of Fig. 3

Fig. 3 shows another embodiment of a transmitter-receiver-set-configuration 45 as shown in Fig. 2b, but further comprising two additional receivers 50 and 52 and two additional transmitters 46 and 48. Due to the two additional transmitters 46 and 48 and the two additional receivers 50 and 52, 12 additional transmitter-receiver-lines are defined. As a result of this, the overall 16 transmitter-receiver-lines, which lie at least approximately in a common spatial plane, define 36 crossing-points, wherein for each crossing-point the respective distance parameter h1 is known.

In the embodiment of Fig. 3 the calculator 20 may be configured to determine the distance parameter h without solving a system of equations. For example, the calculator 20 may be configured to determine a plurality of overlapping ranges for the distance parameter h and to intersect the ranges to obtain a high value. Therefore, the calculator 20 is configured to use the additional information from the further receivers 50 and/or 52. The calculator 20 is configured to obtain in addition to a first range of distance parameters h, which is determined as discussed with reference to Fig. 2b, a second range, which is also determined as discussed with reference to Fig. 2b, of possible values of the distance parameter h on the basis of a further time difference $\delta t$, which describes a timing or an order of passings of further crossing transmitter-receiver-lines, and is configured to estimate the distance parameter h on the basis of the overlapping first and second ranges of possible values of the distance parameter h by a approximation or convergent possible values of the distance parameter h. The greater the number of crossing-points, the higher is the probability of accurately obtaining the motion parameters 26 of target 14. Some information regarding motion parameters 26 detected by a system having an set-configuration 45 with a plurality of transmitters and receivers might be redundant information, but this enables to obtain the distance parameter h by using or detecting a number of overlapping ranges of values for the distance parameter h. For each crossing-point the calculator 20 is able to detect, if the target is closer to the receiver 12, 38, 50 and 52 than the respective crossing-point or closer to the transmitter 28, 10, 46 and 48 than the respective crossing-point. Due to this detection and the known distance parameter h1 of the passed crossing-point a range of possible values of the distance parameters h may be obtained for each passing of a crossing-point. The real value of the distance parameter h may be determined by an intersection of a large number of overlapping ranges for possible values of the distance parameters h, which converge to the real value of the distance parameter h.

For example, the first range of possible values of distance parameters h of the target 14 may be determined for the first crossing-point 44, wherein may decide in response to the finding that the transmitter-receiver-line 16 is passed before the transmitter-receiver-line 42 that the possible values of the distance parameter h of the first range are smaller than the distance parameter h1 of the first crossing-point 44, the second range of possible values of distance parameters h may be determined for a second crossing-point, wherein the calculator 20 may decide in response to the finding that the transmitter-receiver-line 42 is passed before the transmitter-receiver-line 1 that the possible values of the distance parameter h of the second range are larger than the distance parameter h1 of the second crossing-point 44. If the distance parameter h1 of the first crossing-point is larger than the distance parameter h1 of the second crossing-point, the calculator 20 may conclude that the distance parameter h of the target 14 lies between the distance parameter h1 of the first crossing-point 44 and the distance parameter h1 of the second crossing-point. Therefore, a new limited range of possible values of the distance parameter h with a maximum distance parameter h equal to the distance parameter h1 of the first crossing-point 44 and with a minimum distance parameter h equal to the distance parameter h1 of the second crossing-point is defined, wherein the new defined limited range is more narrow compered to the first or second range.

In other words, taking a large number of information regarding the distance parameter h (possible values or ranges of values of the distance parameters h) into account, the values of the distance parameter h will converge at least within a certain tolerance to its real value.

On the basis of the detected or determined distance parameter h the velocity parameter v can be easily obtained by using the one equation describing the relationship between geometric parameter of two transmitter-receiver-lines, for example, the two crossing transmitter-receiver-lines 42 and 16, and the time difference $\delta t_3$, as described above. Therefore, a large number of crossing-points 44, etc. improves the detection capability. The number of crossing-points 44, etc. of a set of Nt transmitters and a set of Nr receivers in the same spatial plane or, at least approximately in the same spatial plane is defined as:

$$Ncross = \left( \sum_{i=1}^{Nt-1} i \right) \bullet \left( \sum_{k=1}^{Nr-1} k \right)$$

Although, in the shown embodiments of the transmitter-receiver-set-configuration 45, the transmitters are illustrated as satellites and the receivers as satellite-receivers located on the ground 15, it should be noted that the invention relates to all transmitter- and receiver-combinations, for example, a transmitter-receiver-set-configuration of a near-ground radar system parallel to the ground 15 (target 14 not perpendicular the ground 15). In such transmitter-receiver-set-configurations the distance parameter h would not refer to a distance between the trajectory 13 and the ground 15, namely the altitude, but to a distance between the trajectory 13 and, for example, a transmitter 10, 28 or receiver 12, 38 or an axis analogous to the axis 43.

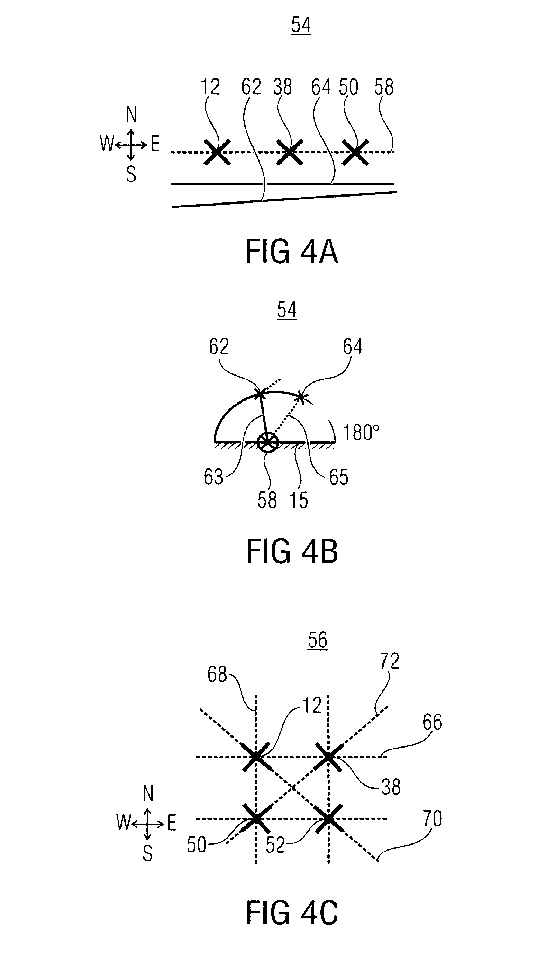

Below, Figs. 4a and 4c illustrate the coverage of a system for obtaining motion parameters 26 of a target 14 according to an embodiment. Here, two possible receiver-set-configurations will be discussed.

Illustration of the receiver-set-configurations of Fig. 4

The radar coverage depends on the number of spatial planes that can be generated with a set of receivers. Fig. 4a shows a top view of a receiver-set-configuration 54 of three receivers 12, 38 and 50 arranged along an axis 58, while Fig. 4b shows the side view of the receiver-set-configuration 54. Two lines 62 and 64 illustrate possible positions of transmitters, wherein the line 62 generates together with the axis 58 a first spatial plane 63 and the line 64 generates together with the axis 58 a second spatial plane 65. It should be noted that the lines 62 and 64 are not necessarily in parallel to the axis 58. Furthermore, the transmitters and receivers 12, 38 and 50 are not necessary arranged along the lines 62 and 64 and the axis 58, respectively. The transmitters and receivers 12, 38 and 50 may be arranged at different positions within the spatial plane 63 or the spatial plane 65. In this embodiment, the axis 58 and so the spatial planes 63 and 65 have an east-west-orientation.

A first transmitter-receiver-set comprises the set of the receivers 12, 38 and 50 and at least two transmitters located on the line 62 (within the first spatial plane 63) and is configured to detect the target 14, the trajectory 13 of which also lies within a first spatial plane 63 and which has, preferably or at least approximately, a constant distance parameter h. A second transmitter-receiver-set comprises the second set of receivers and a plurality of transmitters arranged on the line 64 (within the second spatial plane 65) and the set uses the same receivers 12, 38 and 50 also used for receiving signals from the transmitters of the first transmitter-receiver-set. The second transmitter-receiver-set enables the detection of the target 14, the trajectory 13 of which is in the second spatial plane 65 and has, preferably or at least approximately, a constant distance parameter h. However, in some embodiments, the one or more transmitters may be arranged at different distances from the axis 58, because this may improve a numeric conditioning of the system of equations.

The receiver-set-configuration 54 enables to detect targets (e.g. target 14), the trajectories (e.g. trajectory 13) of which have a east-west-orientation, lie in a common spatial plane of a set of receivers and transmitters (e.g. spatial planes 63 and 65) and lie within a detection range defined by lines-of-sight; for example, in this embodiment, the detection range limited by ground 15 amounts to maximally a 180° angle field around the axis 58. That means, for example, the target 14 cannot be detected by such a receiver-set-configuration 54, when it is on the other side of the globe. On the condition that enough transmitters are available (assumption based on a increasing number of GNSS satellites), each target 14, the trajectory 13 of which lies in a spatial plane, e.g. 63 and 65, defined by transmitters and the receivers 12, 38 and 50, may be detected along the detection direction with the east-west-orientation. In other words, the receiver-set-configuration 54 enables to cover all trajectories of targets that fly from west to east or from east to west on the line of sight of receiver-set-configuration 54.

In contrast, Fig. 4c shows a top view of a receiver-set-configuration 56 of four receivers 12, 38, 50 and 52 arranged in a square, which enables four detection directions along or in parallel with the axes 66, 68, 70 and 72: the first 66 is defined by the receiver 12 and the receiver 38, for example in west-east orientation; the second 68 is defined by the receiver 12 and the receiver 50, for example, the north-south orientation; the third 70 is defined by the receiver 12 and the receiver 52, for example northwest-southeast orientation; and the fourth 72 is defined by the receivers 50 and 38, for example northeast-southwest orientation.

On the condition that enough transmitters are available, each target 14 may be detected, the trajectory 13 of which lies in a spatial plane, which is defined by two of the receivers 12, 38, 50 or 52 and at least two transmitters, along one of four detection directions (N-S-, E-W-, NE-SW- and NW-SE-orientation). In other words, the system will cover all trajectories confined in the theoretically infinite number of spatial planes that can be generated with a set of at least two inline receivers.

As shown above, the coverage of the system may be increased not only by an increasing number of receivers, but also by an increasing number of transmitters, or both. Therefore, it is advantageous to use transmitters that are present in quantity, such as, for example, satellites. The used satellites may be a part of a global navigation satellite system (GNSS), where many transmitters can be found simultaneously in the sky. Only with GPS, between 8 and 10 satellites are constantly available. Adding, for example, the ones from GLONASS (Russian), the coming Galileo (Europe) and the Compass system (China), many other transmitters will be available (especially in the near future). Moreover, such a system is not limited to global navigation satellite system satellites. Other satellites can also be used as transmitters. Therefore, with so many transmitters, a large number of crossing-points 44 are achieved with just a low number of receivers.

It should be noted that in case of using non-geosynchronous satellites as transmitters the conditions regarding a transmitter-receiver-set lying in a common spatial plane may be complied temporarily. According to an embodiment, the motion parameters 26 of the target 14 may be obtained if the trajectory 13 of the target 14 lies, at least approximately, in the common spatial plane which is temporarily defined by two receivers and at least two transmitters. Thus, embodiments in which the conditions regarding the geometric arrangement of the transmitters and receivers are only archived temporarily also lie within the scope of the invention. In some embodiments, the calculator may be configured to selectively use such transmitter-receiver-pairs which fulfill the above discussed geometric conditions.

Alternatively, the receivers may be configured to receive signals from other transmitters, such as television broadcasting or mobile communication base stations.

Although some aspects have been described in the context of an apparatus, it is clear that these aspects also represent a description of the corresponding method for obtaining one or more motion parameters 26, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

In summery, the invention relates to a calculator 20 or a method for determining the trajectory 13 of a target 14 including the distance parameter h and the velocity v of a flying target 14 using forward scattering radar. The method is based on using a certain number of receivers (e.g. receiver 10 and 28) and transmitters (e.g. transmitter 12 and 38), the more the better, to generate spatial virtual cross-points (e.g. crossing-point 44) with the baselines (transmitter-receiver-lines e.g. 42, 40, 16 and 30) defined by transmitters (satellites for instance, e.g. transmitter 12, 38, etc.) and receivers (e.g. receiver 10, 28, etc.). It is possible to define if the moving target 14 flies above or below those cross-points. Than, having a large amount of them, the altitude (distance parameter h) of the target 14 can be estimated. After that, the velocity v can be easily obtained, assuming it that both altitude (distance parameter h) and velocity v have remained constant.

**Claims**

1. A calculator (20) for obtaining one or more motion parameters (26) of a target (14),
   wherein the calculator (20) is configured to obtain the one or more motion parameters (26) on the basis of at least two time differences,
   wherein the first of the time differences describes a timing of passings of a first pair of transmitter-receiver-lines by the target (14), and
   wherein a second of the time differences describes a timing of passings of a second pair of transmitter-receiver-lines by the target (14),
   wherein the second pair of the transmitter-receiver-lines is different from the first pair of transmitter-receiver-lines.

ceiver-lines.

2. A calculator (20) according to claim 1, wherein the two pairs of transmitter-receiver-lines (30, 16, 42, 40) are defined by two receivers (10, 28) and two transmitters (12, 38).

3. A calculator (20) according to one of claims 1 or 2, wherein the calculator (20) is configured to obtain a first range of possible values of a distance parameter h of the one or more motion parameters (26), wherein the distance parameter h describes a distance between a trajectory (13) of the target (14) and one of the transmitters (28, 10) or receivers (12, 38),
   on the basis of a single one of the time differences, which describes an order of passings of a second transmitter-receiver-line (16) and of a third transmitter-receiver-line (42),
   wherein the second and the third transmitter-receiver-line (42, 16) cross each other at a crossing-point (44).

4. A calculator (20) according to claim 3, wherein the calculator (20) is configured to obtain, on the basis of the order of the passings of the second transmitter-receiver-line (16) and of the third transmitter-receiver-line (42), an information describing whether the possible values of the distance parameter h are larger or smaller than a distance parameter h1 of the crossing-point (44), wherein the distance parameter h1 of the crossing-point (44) describes a distance between the crossing-point (44) and one of the transmitters (28, 10) or of the receivers (12, 38), or whether the distance parameter h is equal to the distance parameter h1 of the crossing-point (44).

5. A calculator (20) according to one of claims 3 to 4, wherein the calculator (20) is configured to obtain a second range of possible values of the distance parameter h on the basis of a further time difference, which describes a timing of passings of further crossing transmitter-receiver-lines, and
   wherein the calculator (20) is configured to estimate the distance parameter h on the basis of the overlapping first and second ranges of possible values of the distance parameter h using an intersection of the first and second ranges.

6. A calculator (20) according to one of claims 1 to 5, wherein the calculator (20) is configured to obtain one or more motion parameters (26) using geometric information about the transmitter-receiver-lines (30, 42, 16, 40).

7. A calculator (20) according to one of the .claims 1 to 6, wherein the calculator (20) is configured to obtain the motion parameters (26) on the basis of a first equation (20a), which describes a relationship between a distance parameter h, which describes a distance between a trajectory (13) of the target (14) and one of the transmitters (28, 10) or the receivers (12, 38), a velocity parameter v, which describes a velocity of the target (14) and the first time difference, and/or on the basis of a second equation (20b) which describes a relationship between a distance parameter h, which describes a distance between a trajectory (13) of the target (14) and one of the transmitters (28, 10) or one of the receivers (12, 38), a velocity parameter v, which describes the velocity of the target, and the second time difference.

8. A calculator (20) according to claim 7, wherein the calculator (20) is configured to determine a solution of the system of equations comprising the first equation (20a) and/or the second equation (20b).

9. A calculator (20) according to claim 7 or 8, wherein the equations (20a, 20b) are dependent on geometric parameters of the two pairs of transmitter-receiver-lines (30, 16, 42 and 40), and wherein the two pairs of the transmitter-receiver-lines (30, 16, 42, 40) are chosen such that the first equation (20a) and the second equation (20b) are linearly independent such that a unique solution of the motion parameters (26) is obtainable.

10. A calculator (20) according to one of claims 1 to 9, wherein the calculator (20) is configured to obtain the motion parameters (26) based on an assumption that the distance (32) between the trajectory (13) of the target and one of the receivers (12, 38) or transmitters (28, 10) and the velocity of the target (14) are constant.

11. A calculator (20) according to one of claims 1 to 10, wherein the calculator (20) is configured to detect a target (14), a trajectory (13) of which lies within a first spatial plane defined by a first set of a first plurality of transmitters (10, 28) and a first plurality of receivers (12, 38); and wherein the calculator (20) is configured to detect a target (14), a trajectory (13) of which lies within a second spatial plane defined by a second set of a second plurality of transmitters and a second plurality of receivers.

12. A system for obtaining one or more motion parameters (26) of a target (14), the system comprising:

at least two receivers (12, 38) configured to detect a target (14) passing transmitter-receiver-lines (30, 42, 16, 40);
a calculator according to one of the claims 1 to 11,
wherein the system is configured to obtain a first time difference and/or a second time difference on the basis of a detection of the target (14) passing the one or more respective transmitter-receiver-lines (30, 42, 16, 40).

13. A system according to claim 12, wherein the receivers (12, 38) are configured to receive signals from satellites used as transmitters (28, 10).

14. A system according to one of claims 12 to 13, wherein the two receivers (12, 38) are arranged such that the two receivers (12, 38) are geographically separated by a distance which is sufficiently large so that a time difference between a signal of a given one of the transmitters (28, 10) received by the first receiver (12) and the signal of the given one of the transmitters (28, 10) received by the second receiver (38) is larger than 10 times of a time measurement resolution of the receivers (12, 38).

15. A system according to one of claims 12 to 14, wherein the two receivers (12, 38) are arranged such that the two receivers (12, 38) and the two transmitters (28, 10) are in a common spatial plane within a tolerance such that an angle between the second transmitter (28), a target position on the trajectory (13) of the target (14), which lies in a spatial plan defined by the first transmitter (10), the second transmitter (28) and the first receiver (12), and one of the receivers (12, 38) is in a range between 170° and 190° or in a range between 178° and 182°.

16. A method for obtaining one or more motion parameters (26) of a target (14), the method comprising:

obtaining a first time difference, which describes a timing of passings of a first pair of transmitter-receiver-lines (30, 16) by the target (14); and/or obtaining a second time difference, which describes a timing of passings of a second pair of transmitter-receiver-lines (42, 40) by the target (14);
wherein the second pair of the transmitter-receiver-lines (42, 40) is different from the first pair of the transmitter-receiver-lines (30, 16); and obtaining one or more motion parameters (26) on the basis of the obtained first (22) and/or second (24) time differences.

17. A computer program for performing the method according to claim 16 when running storage medium having stored thereon a computer program having a program code for performing, when computer program runs on a computer.

**Amended claims in accordance with Rule 137(2) EPC.**

**1.** A calculator (20) for obtaining one or more motion parameters (26) of a target (14),

wherein the calculator (20) is configured to estimate a distance parameter h of the one or more motion parameters (26) on the basis of overlapping first and second ranges of possible values of the distance parameter h using an intersection of the first and second ranges,

wherein the first range is obtained on the basis of a first time difference and the second range is obtained on the basis of a second time difference,

wherein the first time difference describes an order of passings of a first pair of transmitter-receiver-lines by the target (14), wherein the first pair of transmitter-receiver-lines comprises two transmitter-receiver-lines (16; 42) crossing each other at a crossing-point (44), and

wherein the second time difference describes an order of passings of a second pair of transmitter-receiver-lines by the target (14), wherein the second pair of the transmitter-receiver-lines is different from the first pair of transmitter-receiver-lines and comprises two transmitter-receiver-lines crossing each other;

wherein the distance parameter h is one of the motion parameters (26) and describes a distance between a trajectory (13) of the target (14) and one of transmitters (28, 10, 46, 48) or receivers (12, 38, 50, 52) which define the two pairs of transmitter-receiver-lines (30, 16, 42, 40).

**2.** A calculator (20) according to claim 1, wherein the calculator (20) is configured to obtain, on the basis of the order of the passings of the second transmitter-receiver-line (16) and of the third transmitter-receiver-line (42), an information describing

whether the possible values of the distance parameter h are larger or smaller than a distance parameter h1 of the crossing-point (44), wherein the distance parameter h1 of the crossing-point (44) describes a distance between the crossing-point (44) and one of the transmitters (28, 10) or of the receivers (12, 38), or

whether the distance parameter h is equal to the distance parameter h1 of the crossing-point (44).

**3.** A calculator (20) according to one of claims 1 to 2, wherein the calculator (20) is configured to obtain one or more motion parameters (26) using geometric information about the transmitter-receiver-lines (30, 42, 16, 40).

**4.** A calculator (20) according to one of the claims 1 to 3, wherein the calculator (20) is configured to obtain the motion parameters (26) on the basis of a first equation (20a), which describes a relationship between the estimated distance parameter h, a velocity parameter v, which describes a velocity of the target (14) and the first time difference, or on the basis of a second equation (20b) which describes a relationship between the estimated distance parameter h, the velocity parameter v and the second time difference.

**5.** A calculator (20) according to claim 4, wherein the calculator (20) is configured to determine a solution of the system of equations comprising the first equation (20a) and/or the second equation (20b).

**6.** A calculator (20) according to claim 4 or 5, wherein the equations (20a, 20b) are dependent on geometric parameters of the two pairs of transmitter-receiver-lines (30, 16, 42, 40), and

wherein the two pairs of the transmitter-receiver-lines (30, 16, 42, 40) are chosen such that the first equation (20a) and the second equation (20b) are linearly independent such that a unique solution of the motion parameters (26) is obtainable.

**7.** A calculator (20) according to one of claims 1 to 6, wherein the calculator (20) is configured to obtain the motion parameters (26) based on an assumption that the distance (32) between the trajectory (13) of the target and one of the receivers (12, 38) or transmitters (28, 10) and the velocity of the target (14) are constant.

**8.** A calculator (20) according to one of claims 1 to 7, wherein the calculator (20) is configured to detect a target (14), a trajectory (13) of which lies within a first spatial plane defined by a first set of a first plurality of transmitters (10, 28) and a first plurality of receivers (12, 38); and

wherein the calculator (20) is configured to detect a target (14), a trajectory (13) of which lies within a second spatial plane defined by a second set of a second plurality of transmitters and a second plurality of receivers.

**9.** A system for obtaining one or more motion parameters (26) of a target (14), the system comprising:

at least two receivers (12, 38) configured to detect a target (14) passing transmitter-receiver-lines (30, 42, 16, 40);

a calculator according to one of the claims 1 to 8, wherein the system is configured to obtain a first time difference and/or a second time difference on the basis of a detection of the target (14) passing the one or more respective transmitter-receiver-lines (30, 42, 16, 40).

**10.** A system according to claim 9, wherein the receivers (12, 38) are configured to receive signals from satellites used as transmitters (28, 10).

**11.** A system according to one of claims 9 to 10, wherein the two receivers (12, 38) are arranged such that the two receivers (12, 38) are geographically separated by a distance which is sufficiently large so that a time difference between a signal of a given one of the transmitters (28, 10) received by the first receiver (12) and the signal of the given one of the transmitters (28, 10) received by the second receiver (38) is larger than 10 times of a time measurement resolution of the receivers (12, 38).

**12.** A system according to one of claims 9 to 11, wherein the two receivers (12, 38) are arranged such that the two receivers (12, 38) and the two transmitters (28, 10) are in a common spatial plane within a tolerance such that an angle between the second transmitter (28), a target position on the trajectory (13) of the target (14), which lies in a spatial plan defined by the first transmitter (10), the second transmitter (28) and the first receiver (12), and one of the receivers (12, 38) is in a range between 170° and 190° or in a range between 178° and 182°.

**13.** A method for obtaining one or more motion parameters (26) of a target (14), the method comprising:

obtaining a first time difference, which describes an order of passings of a first pair of transmitter-receiver-lines (30, 16) by the target (14), wherein the first pair of transmitter-receiver-lines comprises two transmitter-receiver-lines (16; 42) crossing each other at a crossing-point (44);
obtaining a second time difference, which describes an order of passings of a second pair of transmitter-receiver-lines (42, 40) by the target (14),
wherein the second pair of the transmitter-receiver-lines (42, 40) is different from the first pair of the transmitter-receiver-lines (30, 16) and comprises two transmitter-receiver-lines crossing each other;
calculating a first range of possible values of a distance parameter h on the basis of the obtained first time difference;
calculating a second range of possible values of the distance parameter h on the basis of the obtained second time difference; and
estimating the distance parameter h of the one or more motion parameters (26) on the basis of the calculated first and second ranges overlapping each other by using an intersection of the first and second ranges,
wherein the distance parameter h is one of the motion parameters (26) and

describes a distance between a trajectory (13) of the target (14) and one of transmitters (28, 10, 46, 48) or receivers (12, 38, 50, 52) which define the two pairs of transmitter-receiver-lines (30, 16, 42, 40).

**14.** A computer program for performing the method according to claim 13 when running storage medium having stored thereon a computer program having a program code for performing, when computer program runs on a computer.

22

$T_2 - T_1 = \delta t_1$

24

$T_4 - T_3 = \delta t_2$

20

20a

$v = t_1(\delta t_1, h)$

$v = t_2(\delta t_2, v)$

20b

26

v
h
...

FIG 1

FIG 2A

FIG 2B

FIG 2C

FIG 3

EP 2 549 291 A1

54

12  62  38  64  50  58

N
W ←↕→ E
S

FIG 4A

54

62                    64

180°

63                    65
58  15

FIG 4B

56

68          72

12          66

38

N
W ←↕→ E
S

50    52    70

FIG 4C

FIG 5

Europäisches
Patentamt

European
Patent Office

Office européen
des brevets

# EUROPEAN SEARCH REPORT

**Application Number**

EP 11 17 4515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/099440 A1 (CEOS IND PTY LTD [AU]; DICKSON ADAM MATTHEW [AU]; MURTONEN CASPER NAPO) 12 December 2002 (2002-12-12)<br>* abstract *<br>* page 2, line 6 - page 9, line 9 *<br>* figures 2, 7 *<br>* claim 13 * | 1-17 | INV.<br>G01S13/00<br>G01P3/64<br>G01S11/02 |
| X | JP 2000 285380 A (JAPAN RADIO CO LTD) 13 October 2000 (2000-10-13)<br>* abstract *<br>* figures 2, 3 * | 1-3,16, 17 | |
| X | GB 2 269 693 A (TRUVELO MANUFACTURERS [ZA]) 16 February 1994 (1994-02-16)<br>* abstract *<br>* figures 1-3 *<br>* page 2, line 13 - page 15, line 13 *<br>* claims 1, 2 * | 1,2,16, 17 | |
| A | US 5 821 879 A (LIEPMANN TILL W [US]) 13 October 1998 (1998-10-13)<br>* column 3, line 17 - line 42 *<br>* figure 1 * | 1-17 | TECHNICAL FIELDS SEARCHED (IPC) |
| A | WO 2007/088021 A2 (DIEHL STIFTUNG & CO KG [DE]; WESTPHAL ROBERT [DE]) 9 August 2007 (2007-08-09)<br>* the whole document * | 1-17 | G01S<br>G08B<br>G01V<br>G01P |

The present search report has been drawn up for all claims

| Place of search | Date of completion of the search | Examiner |
|---|---|---|
| The Hague | 18 January 2012 | Van den Bosch, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 11 17 4515

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2012

| Patent document cited in search report | | Publication date | Patent family member(s) | | Publication date |
|---|---|---|---|---|---|
| WO 02099440 | A1 | 12-12-2002 | CA | 2449169 A1 | 12-12-2002 |
| | | | EP | 1405085 A1 | 07-04-2004 |
| | | | JP | 2004528662 A | 16-09-2004 |
| | | | NZ | 529947 A | 26-08-2005 |
| | | | US | 2004149939 A1 | 05-08-2004 |
| | | | WO | 02099440 A1 | 12-12-2002 |
| JP 2000285380 | A | 13-10-2000 | NONE | | |
| GB 2269693 | A | 16-02-1994 | AU | 654731 B2 | 17-11-1994 |
| | | | AU | 2107992 A | 24-02-1994 |
| | | | DE | 4230515 A1 | 17-03-1994 |
| | | | GB | 2269693 A | 16-02-1994 |
| | | | US | 5298738 A | 29-03-1994 |
| US 5821879 | A | 13-10-1998 | AU | 8603198 A | 21-02-2000 |
| | | | US | 5821879 A | 13-10-1998 |
| | | | WO | 0007164 A1 | 10-02-2000 |
| WO 2007088021 | A2 | 09-08-2007 | AT | 516511 T | 15-07-2011 |
| | | | CN | 101379411 A | 04-03-2009 |
| | | | DE | 102006005192 A1 | 16-08-2007 |
| | | | EP | 1979761 A2 | 15-10-2008 |
| | | | KR | 20080094708 A | 23-10-2008 |
| | | | US | 2009027263 A1 | 29-01-2009 |
| | | | WO | 2007088021 A2 | 09-08-2007 |

For more details about this annex : see Official Journal of the European Patent Office, No. 12/82